# FASCICULE DE BREVET EUROPEEN

(11) **EP 1 891 844 B1**
(45) Date de publication et mention de la délivrance du brevet: **10.03.2010**
(21) Numéro de dépôt: 06763635.7
(22) Date de dépôt: 12.06.2006
(51) Int. Cl.: H05K 3/12

(54) **TRANSPONDEUR PASSIF COMPACT**
KOMPAKTER PASSIVER TRANSPONDER
COMPACT PASSIVE TRANSPONDER

(30) Priorité: 13.06.2005 EP 05105143
(43) Date de publication de la demande: 27.02.2008
(73) Titulaire: MBBS SA, 2016 Cortaillod (CH)
(72) Inventeur: BUI, Ngoc Chau, CH-2046 Fontaines (CH); BALLIF, Julien, CH-1040 Villars-le-Terroir (CH)
(74) Mandataire: GLN
(86) Numéro de dépôt international: PCT/EP2006/063076
(87) Numéro de publication internationale: WO 2006/134082

(56) Documents cités:
- EP-A- 0 720 122
- EP-A- 0 992 939
- EP-A- 1 429 417
- EP-A- 1 592 142
- WO-A-2004/070966
- CA-A1- 2 196 474
- DE-A1- 4 205 216
- FR-A- 2 801 122
- US-A- 5 973 599
- US-A1- 2004 159 257
- US-B1- 6 421 013
- US-B1- 6 494 305

## Description

L'invention concerne le domaine de l'électronique. Elle porte plus précisément sur un transpondeur passif, ou étiquette électronique, destiné à équiper des instruments ou dispositifs devant être identifiés, partie d'un système RFID (pour Radio Fréquence IDentification), et qui comporte :
- une bobine constituée d'un fil et formant une antenne destinée à interagir avec un rayonnement électromagnétique transportant de l'énergie et de l'information,
- un circuit électronique, comportant deux contacts, relié à la bobine, et agencé pour traiter ladite information.

L'antenne est destinée à capter un rayonnement électromagnétique émis par un module lecture/écriture, et à transmettre au circuit intégré l'énergie et l'information qu'il transporte. Le circuit intégré traite l'information reçue et envoie en retour une information transmise par la même antenne. Dans la présente demande, l'ensemble que forment la bobine et le circuit électronique est appelé tag.

Le tag est ainsi capable de recevoir, traiter, communiquer, et éventuellement enregistrer des données, rendant ainsi possible la traçabilité d'un dispositif qui en serait muni. Le tag équipe, par exemple, des cartes d'identification, des produits durant leur cycle complexe de fabrication, des articles devant être protégés contre la falsification, des pièces mécaniques dont l'historique doit être connu, ou des instruments chirurgicaux devant subir des cycles de stérilisation à haute température. Il est souvent moulé dans du plastique afin de le protéger des contraintes mécaniques, comme décrit dans le document US 6,421,013.

Pour protéger ces tags de manière plus efficace, le document US 5,973,599 propose de munir le transpondeur d'un boîtier en matériau isolant, par exemple en polyimide ou en céramique. Une telle solution permet effectivement de mieux protéger le circuit électronique et l'antenne. Toutefois, lorsque la pastille que forme ainsi le transpondeur est implantée dans un outil en métal, par exemple un outil chirurgical, les traitements thermiques et chimiques successifs peuvent provoquer son descellement.

De plus cette solution n'est pas applicable pour des transpondeurs miniatures de dimensions de l'ordre de quelques millimètres.

Le but de la présente invention est de protéger de manière encore plus efficace le transpondeur dans un environnement rigoureux.

A cet effet, le transpondeur selon l'invention comporte les caractéristiques de la revendication 1.

Dans un mode de réalisation bien connu de l'homme de métier, le circuit intégré est disposé sensiblement sur le même plan que la bobine, à l'intérieur ou à l'extérieur de celle-ci. Ce mode de réalisation est toutefois peu adapté aux tags miniatures, de dimensions de l'ordre de trois à cinq millimètres, destinés à être intégrés dans des dispositifs de petite taille. En effet, la disposition à l'extérieur de la bobine d'une puce grande par rapport à cette dernière, occupe une surface considérable, ce qui implique un encombrement important. De même, la disposition à l'intérieur de la bobine nécessite l'emploi de bobines de diamètre important, rendant le tag encombrant.

L'invention pallie cet inconvénient en proposant un tag compact, dont la disposition est adaptée à des bobines et des circuits intégrés de petite taille.

A cet effet, le circuit électronique est disposé en sur-épaisseur de la bobine.

Avantageusement, le circuit électronique est disposé sur ladite bobine, et chaque extrémité du fil est connectée à l'un des contacts.

Par ailleurs, on notera que le fait de souder directement les fils de la bobine au circuit intégré peut poser quelques problèmes. Si le fil qui constitue la bobine est très fin, il est fragile et l'opération de soudure est alors délicate. Une augmentation de son diamètre permet de résoudre ce problème, mais au dépend de la miniaturisation de l'ensemble.

L'invention permet aussi de réaliser des transpondeurs munis de tags miniatures exempts de ces inconvénients en proposant une structure faisant intervenir la technologie PCB (Printed Circuit Board).

De façon plus précise, le transpondeur selon l'invention présente, avantageusement, les caractéristiques suivantes :
- Un substrat du type circuit imprimé comportant au moins deux bornes de contact est disposé entre ladite bobine et ledit circuit électronique.
- Le substrat du type circuit imprimé comporte quatre bornes de contact reliées deux à deux par une piste conductrice.
- Chaque extrémité du fil est connectée à l'une des quatre bornes du substrat et chacun des contacts est connecté à l'une des quatre bornes du substrat, de sorte que chacune des extrémités du fil est reliée électriquement respectivement à l'un des contacts du circuit intégré.
- Les contacts sont connectés aux bornes du substrat par l'intermédiaire de deux fils ou de deux bumps.

D'autres caractéristiques de l'invention ressortiront de la description qui suit, faite en regard du dessin annexé, dans lequel :
- les figures 1, 2, 3, 4 et 5 représentent, schématiquement, différents modes de réalisation d'un tag, vus en coupe et de dessus.
- la figure 6 représente un transpondeur dans un boîtier de protection en plastique, et
- la figure 7 montre un transpondeur selon l'invention, destiné à assurer une protection optimale dans des milieux plus ou moins agressifs.

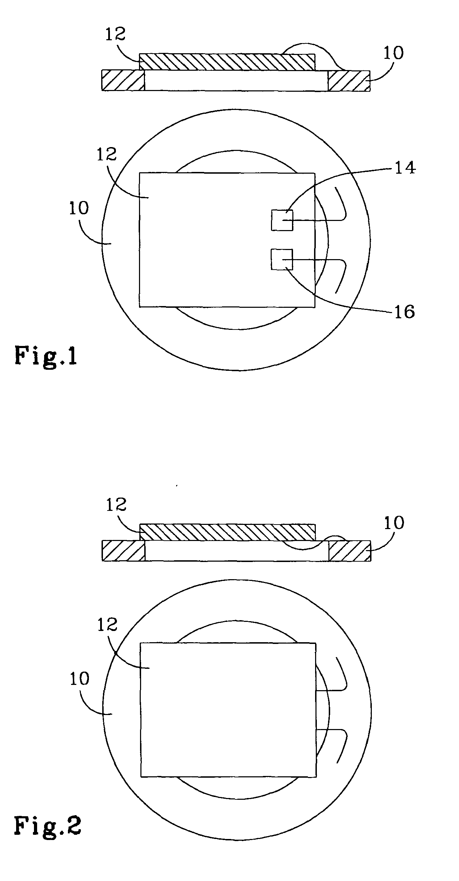

Les figures 1 à 6 sont données à titre d'informations techniques, et décrivent des modes de réalisation qui ne ne sont pas couverts par les revendications et qui ne font pas partie de l'invention.

Le tag représenté en figure 1 comporte une bobine annulaire plate 10 à section rectangulaire, constituée d'un fil isolé enroulé sur lui-même, sans support. Elle est destinée à traiter un signal électromagnétique émis par un module lecture/écriture non représenté, bien connu de l'homme du métier, travaillant dans une fréquence basse, sensiblement comprise entre 30 et 150 kHz.

Sur la bobine 10 est disposé un circuit intégré 12, qui s'inscrit dans le cercle extérieur de la bobine. La face active du circuit 12 se trouve du côté extérieur à la bobine.

Les deux extrémités du fil électrique constituant la bobine sont soudées respectivement à deux plages de contacts 14 et 16, ou pads, situés sur le circuit intégré 12. Ce dernier est collé à la bobine 10 à l'aide d'un point d'une colle résistante à des hautes températures telle que la Loctite ® 5248. Ainsi disposés l'un sur l'autre, la bobine 10 et le circuit intégré 12 occupent une surface nettement inférieure à la surface qu'ils occuperaient selon un mode de réalisation traditionnel, sans pour autant affecter le bon fonctionnement du tag, ainsi que le montre la pratique.

Cet agencement du tag peut être réalisé par deux méthodes de fabrication différentes. Dans une première variante, l'opération de soudage est effectuée alors que le circuit intégré 12 est disposé à côté de la bobine 10. Il est ensuite retourné et collé sur la bobine 10.

Dans une deuxième variante, le circuit intégré 12 est collé sur la bobine 10, puis soudé à celle-ci. Dans cette variante un support est utilisé pour maintenir le tag pendant l'opération de soudage.

Le tag représenté en figure 2 diffère du précédent en ce que la face active du circuit intégré 12 est dirigée vers la bobine 10. Cette disposition du tag est obtenue par soudage du fil au circuit intégré 12 disposé à côté de la bobine 10, puis retournement du circuit 12 sur cette dernière après soudage.

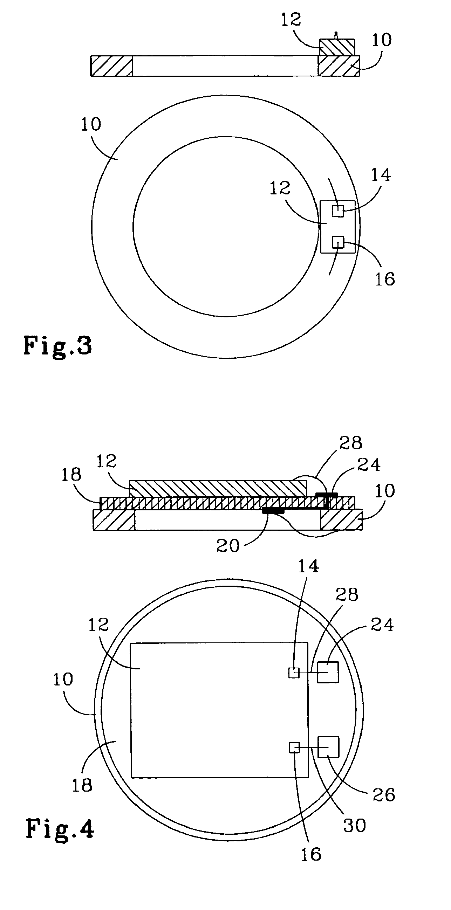

La figure 3 illustre un tag en anneau comportant une bobine 10 à section rectangulaire, et un circuit intégré 12, de petites dimensions en regard des dimensions de la bobine 10, de sorte qu'il repose entièrement sur les spires de celle-ci. Les deux extrémités du fil sont soudées sur les plages 14 et 16 du circuit intégré 12, sans retournement de celui-ci après l'opération de soudage, de telle sorte que la surface active du circuit se trouve du coté opposé à la bobine.

Un autre mode de réalisation avantageux, présenté en figure 4, permet d'augmenter la résistance mécanique des connexions entre la bobine 10 et le circuit intégré 12. Dans cette variante, un substrat 18 formé d'un PCB (Printed Circuit Board) est inséré entre le circuit intégré 12 et la bobine 10, et collé à cette dernière. Le fil de la bobine 10 est soudé en ses deux extrémités, à deux bornes 20 et 22 disposées sur la face inférieure du substrat 18. Ces bornes 20 et 22 sont elles-mêmes connectées, par l'intermédiaire de pistes métalliques, respectivement à deux autres bornes 24 et 26 situées sur la face supérieure du substrat 18. Le circuit intégré 12 est connecté aux deux bornes supérieures 24 et 26 du PCB 18 grâce à deux fils 28 et 30 soudés, à l'une de leurs extrémités, aux plages de contact 14 et 16 et, à l'autre de leurs extrémités, aux bornes 24 et 26. De la sorte, la connexion entre la bobine 10 et le circuit intégré 12 est assurée.

Ce mode de réalisation est avantageux par rapport aux modes de réalisation présentés en figure 1 à 3, puisqu'il permet :
- d'augmenter la résistance mécanique des connexions entre la bobine 10 et le circuit intégré 12, car ces connexions sont assurées en grande partie par les pistes métalliques du PCB, et
- de choisir le type de fils 28 et 30 assurant la connexion entre le PCB 18 et le circuit intégré 12 indépendamment du type de fil de la bobine.

En effet, le fil de la bobine 10 a un diamètre typiquement compris entre 20 et 28 µm. Ce fil, de par ses dimensions, est fragile et ne se prête pas bien à des opérations de soudage et à de longues connexions entre la bobine 10 et le circuit intégré 12. A cet égard, les fils de connexion 28 et 30, de diamètre typiquement 50 µm, sont beaucoup plus résistants. En outre, l'insertion d'un substrat PCB entre le circuit intégré 12 et la bobine 10 confère au tag de la rigidité, sans pour autant affecter son fonctionnement.

Dans une variante non représentée de ce mode de réalisation, les deux paires de bornes 20, 22 et 24, 26 ainsi que les pistes métalliques de connexions sont placées sur la face supérieure du substrat PCB 18. La disposition du circuit intégré 12 et de la bobine 10 est, par contre, inchangée. Le fil de la bobine 10 se connecte aux bornes 20 et 22, en contournant le substrat PCB 18. Cette alternative simplifie la fabrication du PCB et réduit son coût. Par contre, elle est mécaniquement moins favorable car elle a l'inconvénient d'avoir des fils plus longs pour souder la bobine 10 aux bornes 20 et 22. Un mode de réalisation apparenté à ce dernier, consiste à utiliser un substrat PCB 18 ne comportant que deux bornes 24 et 26 en lieu et place de quatre bornes reliées deux à deux. Chaque borne comporte alors deux soudures.

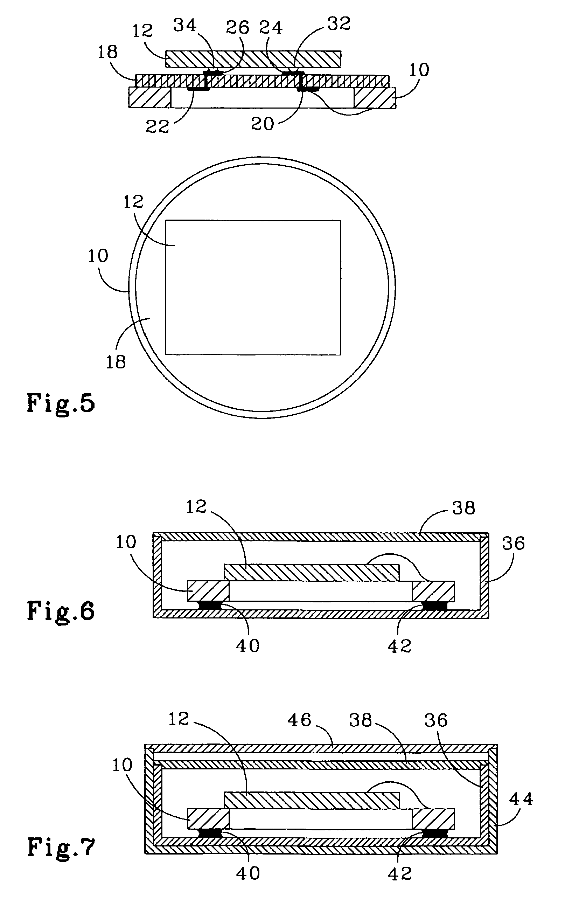

Afin d'éviter le retournement du circuit intégré 12 sur la bobine 10, et la fragilisation des fils de soudure qui en résulte, un cinquième mode de réalisation est proposé en figure 5, en alternative au mode de réalisation proposé en figure 2. Cette variante fait également intervenir un substrat PCB 18, mais diffère de la précédente en ce que le circuit intégré 12 est disposé face active dirigée vers le substrat PCB 18. A cet effet, le circuit intégré 12 est muni de bumps 32 et 34, formant ses contacts, et connectés aux bornes supérieures 24 et 26 du substrat PCB 18 par la technologie appelée flip-chip. De la sorte, la connexion entre la bobine 10 et le circuit intégré 12 est réalisée par l'intermédiaire du substrat PCB 18. Les fils de connexions 28 et 30 sont supprimés et l'opération délicate de retournement de la puce est évitée.

Comme précédemment, une variante de ce mode de réalisation consiste à disposer les deux paires de bornes 20, 22 et 24, 26 ainsi que les pistes métalliques de connexions sur la face supérieure du substrat PCB 18.

En figure 6, un tag, réalisé selon l'un des modes de réalisation présenté ci-dessus, est logé dans un boîtier de protection en plastique constitué d'une boîte cylindrique 36, et d'un couvercle plat 38, rendu solidaire de la boîte 36 par collage, ou soudage aux ultrasons. Le matériau plastique utilisé, tel que du polysulfure de phénylène (PPS), ou du polyetheretherketone (PEEK), doit être résistant au minimum à des températures allant jusqu'à 220°C. L'épaisseur des parois est de l'ordre de 0.2 à 0.4 mm, de sorte que l'ensemble présente une rigidité suffisante pour résister à de petites contraintes mécaniques lors de sa manipulation et de son utilisation.

La bobine 10 est fixée à l'intérieur de la boîte 36 à l'aide de deux points 40 et 42 d'une colle résistant aux hautes températures. Ce mode de faire se distingue du mode traditionnel par moulage dans de la résine. De la sorte, le tag résiste beaucoup mieux à des cycles en température, sans générer de contraintes mécaniques dues à des coefficients de dilatation thermique différents entre résine et fil. Dans une variante simplifiée de ce mode de réalisation, la boîte 36 n'est pas munie de couvercle.

Le transpondeur selon l'invention représenté en figure 7, permet de soumettre des tags à des environnements agressifs à la fois thermiquement mécaniquement, et chimiquement. Dans ce transpondeur, le tag est formé d'une bobine 10, d'un circuit intégré 12, et d'un boîtier plastique du type de celui présenté en figure 6, avec ou sans couvercle 38, lui-même disposé dans un boîtier métallique amagnétique, par exemple en acier inoxydable ou titane, fermé hermétiquement.

Le boîtier est formé d'une coupelle 44, réalisée par décolletage, et d'un couvercle 46 soudé à la coupelle 44, par un procédé connu de l'homme de métier, avantageusement par soudage laser. Un tel tag résiste dans une très large plage aux cycles thermiques, aux chocs, vibrations, agents chimiques et contraintes mécaniques. En outre, le boîtier en matière plastique 36 sert à isoler électriquement l'ensemble formé de la bobine 10 et du circuit intégré 12 et à empêcher qu'ils ne touchent le boîtier métallique.

## Revendications

1. Transpondeur passif comportant :
- une bobine (10) constituée d'un fil et formant une antenne destinée à interagir avec un rayonnement électromagnétique transportant de l'énergie et de l'information, et
- un circuit électronique (12), comportant deux contacts (14, 16), relié à ladite bobine (10), et agencé pour traiter ladite information,
- un premier boîtier, en matière plastique, dans lequel est fixée la bobine (10),
**caractérisé en ce qu'**il est de type à basse fréquence, **en ce que** ladite bobine est fixée par des points d'une colle résistant aux hautes températures dans le boîtier plastique, de sorte que la bobine (10) et le circuit électronique (12) résistent beaucoup mieux à des cycles en température, sans générer de contraintes mécaniques, ledit boîtier plastique étant lui-même disposé dans un deuxième boîtier en métal, formé d'une coupelle (44) et d'un couvercle (46) soudés hermétiquement l'un à l'autre.

2. Transpondeur selon la revendication 1, **caractérisé en ce que** ledit circuit électronique (12) est disposé en surépaisseur de ladite bobine (10).

3. Transpondeur selon la revendication 2 **caractérisé en ce que** ledit circuit électronique (12) est disposé sur ladite bobine (10), et **en ce que** chaque extrémité dudit fil est connectée à l'un desdits contacts (14, 16).

4. Transpondeur selon la revendication 2, **caractérisé en ce qu'**un substrat (18) du type circuit imprimé comportant au moins deux bornes de contact (24, 26) est disposé entre ladite bobine (10) et ledit circuit électronique (12).

5. Transpondeur selon revendication 4, **caractérisé en ce que** ledit substrat (18) du type circuit imprimé comporte quatre bornes de contact (20, 22, 24, 26) reliées deux à deux par une piste conductrice.

6. Transpondeur selon la revendication 5, **caractérisé en ce que** chaque extrémité dudit fil est connectée à l'une des quatre bornes (20, 22, 24, 26) dudit substrat (18) et chacun desdits contacts (14, 16) est connecté à l'une des quatre bornes (20, 22, 24, 26) dudit substrat (18), de sorte que chacune des extrémités dudit fil est reliée électriquement respectivement à l'un des contacts dudit circuit intégré.

7. Transpondeur selon la revendication 6, **caractérisé en ce que** lesdits contacts (14, 16) sont connectés aux dites bornes (24, 26) par l'intermédiaires de deux fils (28, 30).

8. Transpondeur selon la revendication 7, **caractérisé en ce que** lesdits contacts (14, 16) sont connectés aux dites bornes (24, 26) par l'intermédiaires de deux bumps (32, 34).

9. Transpondeur selon l'une des revendications 1 à 8, **caractérisé en ce que** ladite bobine (10) est fixée dans ledit boitier plastique en deux points.

## Claims

1. A passive transponder comprising:
- a coil (10) consisting of a wire and forming an antenna designed to interact with an electromagnetic radiation transporting energy and information, and
- an electronic circuit (12), including two contacts (14, 16), connected to said coil (10), and arranged to process said information,
- a first plastic housing wherein the coil (10) is fixed,
**characterized in that** said transponder is of the low-frequency type, **in that** said coil is fixed by dots of an adhesive resistant to high temperatures in the plastic housing, such that the coil (10) and the electronic circuit (12) resist temperature cycles much better, without generating mechanical stresses, said plastic housing itself being arranged in a second, metal housing, consisting of a cup (44) and lid (46) welded together hermetically.

2. The transponder according to claim 1, **characterized in that** said electronic circuit (12) is arranged in the machining allowance of said coil (10).

3. The transponder according to claim 2, **characterized in that** said electronic circuit (12) is arranged on said coil (10), and **in that** each end of said wire is connected to one of said contacts (14, 16).

4. The transponder according to claim 2, **characterized in that** a printed circuit-type substrate (18) including at least two contact terminals (24, 26) is arranged between said coil (10) and said electronic circuit (12).

5. The transponder according to claim 4, **characterized in that** said printed circuit-type substrate (18) includes four contact terminals (20, 22, 24, 26) connected in pairs by a strip conductor.

6. The transponder according to claim 5, **characterized in that** each end of said wire is connected to one of the four terminals (20, 22, 24, 26) of said substrate (18) and each of said contacts (14, 16) is connected to one of the four terminals (20, 22, 24, 26) of said substrate (18), such that each of the ends of said wire is electrically connected to one of the contacts of said integrated circuit, respectively.

7. The transponder according to claim 6, **characterized in that** said contacts (14, 16) are connected to said terminals (24, 26) via two wires (28, 30).

8. The transponder according to claim 7, **characterized in that** said contacts (14, 16) are connected to said terminals (24, 26) via two bumps (32, 34).

9. The transponder according to one of claims 1 to 8, **characterized in that** said coil (10) is fixed in said plastic housing at two points.

## Patentansprüche

1. Passiver Transponder, umfassend:
- eine Spule (10), die aus einem Draht besteht und eine Antenne bildet, die dazu gedacht ist, mit einer elektromagnetischen Strahlung, die Energie und Informationen transportiert, zu interagieren, und
- einen elektronischen Schaltkreis (12), der zwei Kontakte (14, 16) umfasst, mit der Spule (10) verbunden ist und eingerichtet ist, um die Informationen zu verarbeiten,
- ein erstes Gehäuse aus Kunststoff, in dem die Spule (10) befestigt ist,
**dadurch gekennzeichnet, dass** er von niederfrequenter Art ist, dass die Spule durch Klebepunkte befestigt ist, die den hohen Temperaturen in dem Kunststoffgehäuse standhalten, so dass die Spule (10) und der elektronische Schaltkreis (12) Temperaturwechseln viel besser standhalten, ohne mechanische Spannungen zu erzeugen, wobei das Kunststoffgehäuse wiederum in einem zweiten Gehäuse aus Metall angeordnet ist, das aus einer Schale (44) und einem Deckel (46), die hermetisch zusammengeschweißt werden, gebildet wird.

2. Transponder nach Anspruch 1, **dadurch gekennzeichnet, dass** der elektronische Schaltkreis (12) in einer Verdickung der Spule (10) angeordnet ist.

3. Transponder nach Anspruch 2, **dadurch gekennzeichnet, dass** der elektronische Schaltkreis (12) auf der Spule (10) angeordnet ist, und dass jedes Ende des Drahts an einen der Kontakte (14, 16) angeschlossen ist.

4. Transponder nach Anspruch 2, **dadurch gekennzeichnet, dass** ein Substrat (18) nach Art einer gedruckten Schaltung, das mindestens zwei Kontaktklemmen (24, 26) umfasst, zwischen der Spule (10) und dem elektronischen Schaltkreis (12) angeordnet ist.

5. Transponder nach Anspruch 4, **dadurch gekennzeichnet, dass** das Substrat (18) nach Art einer gedruckten Schaltung vier Kontaktklemmen (20, 22, 24, 26) umfasst, die jeweils zu zweit durch eine Leiterbahn verbunden werden.

6. Transponder nach Anspruch 5, **dadurch gekennzeichnet, dass** jedes Ende des Drahts an eine der vier Klemmen (20, 22, 24, 26) des Substrats (18) angeschlossen ist und jeder der Kontakte (14, 16) an eine der vier Klemmen (20, 22, 24, 26) des Substrats (18) angeschlossen ist, so dass jedes der Enden des Drahts elektrisch jeweils mit einem der Kontakte der integrierten Schaltung verbunden ist.

7. Transponder nach Anspruch 6, **dadurch gekennzeichnet, dass** die Kontakte (14, 16) an die Klemmen (24, 26) über zwei Drähte (28, 30) angeschlossen sind.

8. Transponder nach Anspruch 7, **dadurch gekennzeichnet, dass** die Kontakte (14, 16) an die Klemmen (24, 26) über zwei Kontakthöcker (32, 34) angeschlossen sind.

9. Transponder nach einem der Ansprüche 1 bis 8, **dadurch gekennzeichnet, dass** die Spule (10) in dem Kunststoffgehäuse an zwei Punkten befestigt ist.
